# EUROPÄISCHE PATENTSCHRIFT

(11) **EP 3 697 196 B1**
(45) Veröffentlichungstag und Bekanntmachung des Hinweises auf die Patenterteilung: **24.11.2021**
(21) Anmeldenummer: 18793375.9
(22) Anmeldetag: 16.10.2018
(51) Int. Cl.: A01D 34/73, A01D 34/835

(54) **SCHNEIDELEMENT MIT ZIEHENDEM SCHNITT**
CUTTING ELEMENT HAVING A PULLING CUT
ÉLÉMENT DE COUPE DOTÉ D'UNE COUPE TRACTÉE

(30) Priorität: 18.10.2017 DE 102017124324
(43) Veröffentlichungstag der Anmeldung: 26.08.2020
(73) Patentinhaber: Carl Geringhoff GmbH & Co. KG, 59227 Ahlen (DE)
(72) Erfinder: SCHLAMANN, Frank, 48599 Gronau (DE)
(74) Vertreter: Weeg, Thomas
(86) Internationale Anmeldenummer: PCT/EP2018/078261
(87) Internationale Veröffentlichungsnummer: WO 2019/076905

(56) Entgegenhaltungen:
- DE-A1-102015 115 100
- GB-A- 2 000 951
- US-A- 2 815 631
- US-A- 2 891 369
- US-A1- 2013 111 863

## Beschreibung

Die vorliegende Erfindung bezieht sich auf ein Anbaugerät zur Ernte von stängeligem Halmgut mit einer Fördervorrichtung und einer in einer Ebene unterhalb der Fördervorrichtung angeordneten Vorrichtung zum Schneiden von Stängeln, die zumindest ein in einer horizontalen oder zumindest annähernd horizontalen Ebene rotierend umlaufendes Schneidelement aufweist.

Ein gattungsgemäßes Anbaugerät ist aus der Schrift DE 10 2015 115 100 A1 in Gestalt eines Maispflückers bekannt. In diesem Anbaugerät läuft ein Stängel des Halmguts - wie beispielsweise einer Maispflanze - ein, der Stängel wird von Pflückwalzen nach unten gerissen und der Fruchtstand, wie beispielsweise ein Maiskolben einer Maispflanze, wird dabei von den Pflückplatten der Pflückvorrichtung vom Maisstängel abgetrennt. Die vom Stängel abgetrennten Maiskolben werden mit einer Fördervorrichtung einer Dreschvorrichtung zugeführt. Der übrig bleibende Maisstängel wird von den Pflückwalzen weiter nach unten befördert, er kann dabei auch geschnitten oder angeschnitten werden. Ein nach unten gerissener Stängel wird unterhalb der Pflückwalzen von zumindest annähernd in einer horizontalen Ebene rotierend umlaufenden Häckselmessern, die im Bereich der Pflückwalzen angeordnet sind, abgeschnitten. Die umlaufenden Häckselmesser schneiden von den Pflückwalzen nach unten beförderte Stängelstücke in noch kürzere Stängelstücke, die dann auf das Feld abgeworfen werden. Dort können die Stängelstücke dann verrotten. Die umlaufenden Schneidelemente sollen die Stoppeln aufspleissen und das Stroh der geschnittenen Stängel auf dem Boden verteilen.

Die umlaufend rotierenden Häckselmesser schneiden je nach Höheneinstellung des Anbaugeräts nicht nur die von den Pflückwalzen nach unten gerissenen Stängelstücke, sondern sie kappen auch die überstehenden Enden der Stoppeln der Maispflanzen, die nach dem Abtrennen der Stängel noch auf dem Acker stehen. Ein Beispiel für diese Arbeitsweise findet sich in der Schrift DE 102 50 302 B4. Die verbleibenden Stoppel werden jedoch nicht weiter aufgespleisst und von den Reifen der Erntemaschine oder sonstigen Fahrzeugen auf dem Feld in den Boden gedrückt, wo sie von Mikroorganismen nur sehr schwer zersetzt werden können. Häufig ist noch eine gesonderte Stoppelnachbearbeitung erforderlich, bei der die Stoppel nach der Ernte so geschädigt werden müssen, dass sie noch vor der Aussaat der nachfolgenden Frucht ausreichend verrottet sind. Dafür ist ein zusätzlicher Arbeitsaufwand erforderlich, und die zusätzliche Überfahrt über das Feld verdichtet den Boden unnötig.

Es hat sich gezeigt, dass bei den hohen Drehzahlen der rotierenden Häckselmesser einiger Staub durch aufgewirbeltes Erntegut erzeugt wird, der die Sicht des Fahrers auf den Erntevorsatz behindert. Das Stroh der geschnittenen Stängel wird schwadartig auf eine Stoppelreihe abgelegt und nicht ausreichend verteilt. Des Weiteren ist es nicht ausgeschlossen, dass die rotierenden Häckselmesser in ihrer umlaufenden Bewegung an Fremdkörper wie beispielsweise Steine anstoßen, die dann von dem jeweils berührenden Häckselmesser weggeschleudert werden. Das ist potentiell gefährlich.

Die vorstehend für Maispflücker beschriebenen technischen Probleme bestehen grundsätzlich in gleicher Weise bei Maisgebissen, die die Maisstängel nur schneiden und abfördern, damit die abgeschnittenen Pflanzen in ihrer Gesamtheit zu Silagefutter in einem Feldhäcksler kleingehäckselt werden. Bei solchen Anbaugeräten entfallen die Pflückvorrichtungen und der Abwurf der von den Kolben getrennten Pflanzenbestandteile auf das Feld. Die Pflanzenstängel werden nicht durch umlaufende Häckselmesser mehrfach zerkleinert, sondern nur einmalig durch eine unterhalb der Förderorgane angeordnete Messerscheibe als Schneidelement geschnitten. Auch hier fehlt es jedoch an einer geeigneten Stoppelbearbeitung durch die rotierenden Schneidelemente des Anbaugeräts in Gestalt der Schneidscheiben.

Es ist die Aufgabe der vorliegenden Erfindung, die aus dem Stand der Technik bekannten nachteiligen Effekte nach Möglichkeit zu vermindern.

Die Aufgabe wird für ein gattungsgemäßes Anbaugerät gelöst, indem das Schneidelement an seinem äußeren Rand eine Leitfläche aufweist, die sich von der Klingenebene aus abwärts erstreckt, wobei die Leitfläche in Rotationsrichtung des Schneidelements nach innen um einen Anstellwinkel angestellt ist.

Die Leitfläche fördert die Luft, die Biomasse sowie andere Raumkörper, die von der Leitfläche erfasst werden, auf die Rotationsachse des rotierend umlaufenden Schneidelements zu, also nach innen hin. Bei einer üblichen hohen Drehzahl des Schneidelements bildet dieses zusammen mit der seitlichen Leitfläche innerhalb seines Hüllkreises eine Art Glocke oder Käfig, in dessen Innenraum die Luft, die Biomasse sowie andere Raumkörper, die in den Wirkbereich der Leitfläche gelangt sind, miteinander vermischt werden. Die Glocke oder der Käfig sind nach oben und zur Seite hin durch das mit einer hohen Geschwindigkeit rotierende Schneidelement mit der sich nach unten erstreckenden Leitfläche quasi geschlossen. Die Schneidelemente sind üblicherweise in einer zentralen Halterung gehalten, die nach oben hin geschlossen ausgeführt ist. Die von den rotierenden Leitflächen nach innen beförderte Luft, die Biomasse und die sonstigen Raumkörper, die von der Leitfläche eines Schneidelements nach innen befördert worden sind, können deshalb von der Mitte des Innenraums aus nicht nach oben hin ausweichen. Das in der Glocke oder dem Käfig befindliche Material kann somit nur nach unten aus dem Innenraum heraus gelangen.

Die Länge der Leitfläche ist ausgelegt auf die Vorfahrtgeschwindigkeit, mit der die Erntemaschine, die das Anbaugerät trägt, üblicherweise in den Bestand des Ernteguts hineinfährt, sowie auf die Rotationsgeschwindigkeit, mit der die Schneidelemente umlaufen. Die Länge der Leitfläche sollte bei der gegebenen Vorfahrtgeschwindigkeit und Rotationsgeschwindigkeit ausreichen, um die Stoppel ausreichend zu zerfasern und aufzuspleissen.

Vom dem nach unten ausweichenden Luftstrom, den die rotierenden Leitflächen erzeugen, wird das geschnittene Stroh und andere Raumkörper mitgenommen und auf den Ackerboden zwischen die Stoppeln gedrückt. Daraus ergibt sich ein Gutfluss, der von der Seite her Luft, die Biomasse sowie andere Raumkörper, die in den Wirkbereich der Leitfläche gelangt sind, mit einem Sog im äußeren Umfangsbereich der Leitflächen und einem Überdruck an der Innenfläche nach innen hin zusammenführt und sodann über die Fläche des Hüllkreises des oder der rotierenden Schneidelemente auf den Boden bläst, weil die angesammelten Bestandteile nur in diese Richtung aus dem Wirkbereich des Schneidelements mit den Leitflächen gelangen können. Dadurch wird auch der Überdruck aus der angesammelten Luft innerhalb der Glocke mit dem Luftstrom nach unten hin abgebaut. Das gehäckselte Stroh wird auf diese Weise gleichmäßiger auf dem Ackerboden verteilt. Im Arbeitsbereich des Erntevorsatzes fliegt weniger Material unkontrolliert herum, so dass der Betrieb des Erntevorsatzgeräts insgesamt sicherer wird.

Die Wirkung eines rotierenden Schneidelements als eine Art Glocke oder Käfig ist umso stärker, je schneller und/oder je mehr Schneidelemente mit Leitfläche um eine gemeinsame Rotationsachse rotieren. So können beispielsweise zwei, drei oder vier Schneidelemente vorhanden sein, die um eine gemeinsame Rotationsachse drehen.

Bei der erfindungsgemäßen Ausgestaltung des Schneidelements ist die Staubentwicklung deutlich verringert. Durch den nach unten gerichteten Abwind aus der Häckselvorrichtung wird staubbelastete Luft vom Gutstrom mitgenommen und zusammen mit den gehäckselten Pflanzenresten auf den Ackerboden geblasen.

Die Leitfläche an dem rotierenden Schneidelement ist aber nicht nur vorteilhaft für die Strohverteilung auf die abgeerntete Fläche, sie zerspleisst und zerschlägt auch beim Auftreffen auf einen Stoppel dessen Struktur und zerfasert ihn bis weit unter die Klingenebene hinab, die nach dem Stand der Technik mit der Klinge nicht mehr erreichbar wäre. Der Stoppel ist nach dem Kontakt mit der Leitfläche für Mikroorganismen leichter zugänglich, wodurch die Verrottung des Stoppels gefördert wird. Je nach Rotationsgeschwindigkeit und Zahl der rotierenden Schneidelemente kann ein einzelner Stoppel bei der Überfahrt mit einer Erntemaschine mehrfach von einer Leitfläche getroffen werden, wodurch ein Stoppel noch besser aufgespleisst und zerschlagen wird. Eine Stoppelnachbearbeitung in einem weiteren Arbeitsgang auf dem Feld ist nicht mehr erforderlich.

Nach einer Ausgestaltung der Erfindung verläuft der Übergang von der Klingenebene zur Leitfläche in einem gerundeten Bogen. Eine Anbindung der Leitfläche in einem gerundeten Bogen vermag höhere Kraftspitzen aufzunehmen als eine scharfe Kante im Übergangsbereich. Das Schneidelement ist auf diese Weise widerstandsfähiger gegen einen Kontakt mit Fremdkörpern.

Nach einer Ausgestaltung der Erfindung ist die Leitfläche in einem Anstellwinkel von mehr als 15° zur Senkrechten auf die Klingenvorderkante nach innen weisend angestellt. Durch die ausgeprägte Schrägstellung der Leitfläche im Verhältnis zur Rotationsrichtung des Schneidelements ergibt sich eine ausreichend große Förder- und Aufspleisswirkung der Leitfläche. Auch die Luftförderwirkung der Leitfläche, die auf den Gutfluss und den Abwurf der Stängelstücke auf das Feld einen erheblichen Einfluss ausübt, ist bei der vorgeschlagenen Gestaltung vorteilhaft.

Nach einer Ausgestaltung der Erfindung weist die Leitfläche an ihrer in Rotationsrichtung weisenden Stirnseite eine schräg verlaufende Kante auf, die von der Klingenvorderkante im oberen Bereich nach unten hin entgegen der Rotationsrichtung nach hinten zurückfällt. Durch die schräg verlaufende Kante prallt die Stirnseite der Leitfläche nicht stumpf mit ihrer gesamten Fläche gegen die Außenseite eines Stoppels, sondern kann nach Art eines ziehenden Schnittes zunehmend in das Material des Stoppels einziehen, ohne dass dabei allzu hohe Kraftspitzen entstehen.

Nach einer Ausgestaltung der Erfindung fällt die Unterkante der Leitfläche entgegen der Rotationsrichtung von vorne nach hinten im Verhältnis zur Klingenebene nach unten ab. Durch die abfallende Form kann die Leitfläche bei einem Boden- oder Fremdkörperkontakt in Rotationsrichtung von vorne nach hinten auf den Boden beziehungsweise den Fremdkörper aufgleiten. Die Schneidelementklinge wird dadurch während der Rotationsbewegung nach oben hin angehoben. Der Verschleiß und die Bruchgefahr werden dadurch reduziert. Das Schneidelement kann dadurch über die Höheneinstellung des Anbaugeräts sehr dicht am Feldboden entlang geführt werden. Die Stoppeln werden dadurch sehr dicht über dem Boden von den Leitflächen erfasst und zerfastert.

Nach einer Ausgestaltung der Erfindung weist die Leitfläche in ihrem hinteren Drittel die größte Höhenerstreckung auf. Da sich getroffene Stoppel nach dem Erstkontakt mit der Leitfläche nach unten und zur Seite wegbewegen, würden die entgegen der Rotationsrichtung gelegenen hinteren Teile der Leitfläche keinen oder nur noch einen unwesentlichen Kontakt zum Erntegut bekommen, wenn die Leitfläche in diesem Bereich nicht weiter nach unten reichen würde als in dem Teil der Leitfläche, die in Rotationsrichtung gesehen weiter vorne ausgebildet ist. Der Verschleiß und die Arbeitsleistung der Leitfläche sind auf diese Weise besser über die Gesamtfläche der Leitfläche verteilt.

Nach einer Ausgestaltung der Erfindung beträgt der Anstellwinkel der Leitfläche zur Klingenebene in radialer Richtung von der Schwenkachse des Schneidelements und in vertikaler Richtung zum Boden 80° bis 100°. Bei einem genau oder etwa 90° betragenden Anstellwinkel ergibt sich eine gute Funktion der Leitfläche.

Nach einer Ausgestaltung der Erfindung weisen die Stirnseite und/oder die Unterkante der Leitfläche gegenüber dem übrigen Material der Leitfläche eine Materialhärtung auf. Da diese Bereiche der Leitfläche einer besonderen Belastung und einem hohem Verschleiß unterliegen, ist eine entsprechende Materialhärtung vorteilhaft.

Nach einer Ausgestaltung der Erfindung ist auf die Leitfläche eine auswechselbare Verschleißplatte aufgesetzt. Im Bereich der Leitfläche ist mit einem erheblichen Verschleiß zu rechnen, der höher ist als der Verschleiß der Klingen des Schneidelements. Durch die Verschleißplatte muss nicht das gesamte Schneidelement ausgetauscht werden, wenn im Bereich der Leitfläche ein erheblicher Verscheiß eingetreten ist, sondern es genügt, die Verschleißplatten auszutauschen. Die Schneidelemente erhalten dadurch insgesamt eine längere Standzeit, und die Schneidelemente müssen nicht häufiger getauscht werden, als es der Fall wäre, wenn sie keine Leitflächen aufweisen würden.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht auf ein Reihenaggregat eines Anbaugeräts,
- Fig. 2:: eine Ansicht von schräg unten auf ein Schneidelement mit Leitfläche,
- Fig. 3:: eine stirnseitige Ansicht des in Fig. 2 gezeigten Schneidelements,
- Fig. 4:: eine Ansicht von schräg hinten auf das in den Fig. 2 und 3 gezeigte Schneidelement, und
- Fig. 5:: eine Ansicht von oben auf ein Schneidelement.

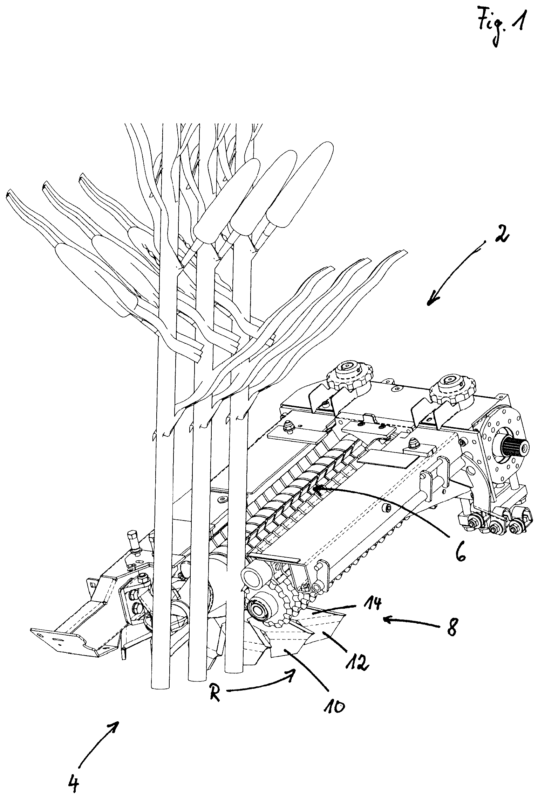

In Fig. 1 ist eine Ansicht auf ein Reihenaggregat 2 eines Anbaugeräts ohne die zugehörigen Pflückplatten gezeigt. Das Reihenaggregat 2 verfügt über einen Einzugsbereich 4, in den die Stängel des Ernteguts einlaufen. Hinter dem Einzugsbereich 4 befindet sich eine Pflückvorrichtung 6, mit der die Stängel von den rotierend angetriebenen Pflückrotoren nach unten gezogen werden. Dabei werden die Maiskolben an zeichnerisch nicht näher dargestellten Pflückplatten, die einen Pflückspalt begrenzen, von den Stängeln abgepflückt.

Unterhalb der Pflückvorrichtung 6 befindet sich eine Vorrichtung 8 zum Schneiden der Stängel, die mit der Pflückvorrichtung 6 nach unten befördert werden. Die Vorrichtung 8 verfügt über ein oder mehrere rotierende Schneidelemente 10. Das in Fig. 1 gezeigte Schneidelement 10 ist in verschiedenen Drehstellungen gezeigt, die es im Verlauf einer Umdrehung einnimmt. Diese Schneidelemente 10 schneiden sowohl die Stängel von den mit dem Boden fest verbundenen bleibenden Stoppeln ab als auch die Stängel und Blätter in kleinere Teile, die von den Pflückrotoren nach unten abgefördert werden. Die Schneidelemente 10 rotieren in die Rotationsrichtung R. Die Schneidelemente 10 verfügen über Leitflächen 12, die sich von der Klingenebene 14 aus abwärts erstrecken.

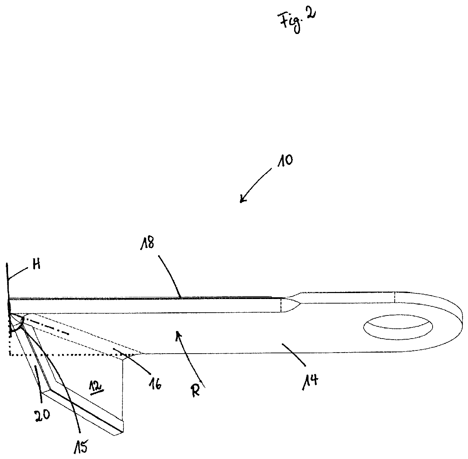

In Fig. 2 ist eine Ansicht von schräg unten auf ein Schneidelement 10 mit einer Leitfläche 12 gezeigt. Die rechteckige Grundform der Klingenfläche ist durch punktierte Linien angedeutet. In dieser Ansicht ist erkennbar, dass die Leitfläche 12 bezogen auf die vordere äußere Ecke der Klingenfläche, auf die die Hochachse H eingezeichnet ist, in Rotationsrichtung R des Schneidelements 10 nach innen um einen Anstellwinkel 15 angestellt ist, wobei der Verlauf der Winkelstellung der Leitfläche 12 im Verhältnis zur Hochachse H durch eine strichpunktierte Linie angedeutet ist. Durch den Anstellwinkel 15 ragt die Leitfläche 12 bei einer Rotationsbewegung des Schneidelements 10 in Rotationsrichtung R in den Freiraum hinein, der sich zwischen der Stirnseite 20 der Leitfläche 12 und der Rotationsachse des Schneidelements 10 unterhalb der Klingenebene 14 des Schneidelements 10 befindet.

Der Übergang 16 zwischen der Klingenebene 14 und der Leitfläche 12 ist im Ausführungsbeispiel bogenförmig gestaltet.

Die Stirnseite 20 der Leitfläche 12 weist eine schräg verlaufende Kante auf, die von der Klingenvorderkante 18 im oberen Bereich nach unten hin entgegen der Rotationsrichtung R nach hinten zurückfällt.

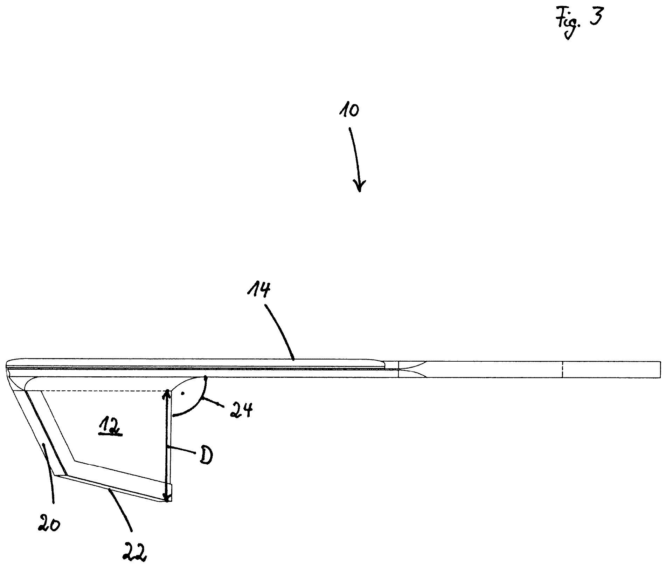

In Fig. 3 ist eine stirnseitige Ansicht des in Fig. 2 gezeigten Schneidelements 10 gezeigt. In dieser Ansicht ist erkennbar, wie weit die Leitfläche 12 in den Freiraum zwischen der Stirnseite 20 und der Rotationsachse des Schneidelements 10 hineinragt. In dieser Ansicht ist auch gut die schräg verlaufende Kante im Bereich der Stirnseite 20 zu erkennen. Die Unterkante 22 der Leitfläche 12 fällt entgegen der Rotationsrichtung R von vorne nach hinten im Verhältnis zur Klingenebene 14 nach unten ab. In ihrem hinteren Drittel weist die Leitfläche 12 die größte Höhenerstreckung D auf. Der Anstellwinkel 24 der Leitfläche 12 zur Klingenebene 14 beträgt im Ausführungsbeispiel etwa 90°. Aufgrund der perspektivischen Ansicht ist dieser Winkel in Fig. 3 erst bei genauerer Betrachtung erkennbar.

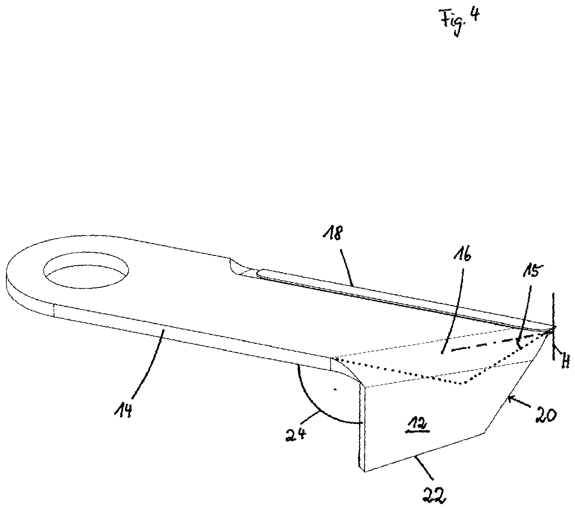

Besser erkennbar ist der annähernd rechte Anstellwinkel 24 zwischen der Leitfläche 12 und der Klingenebene 14 in der Fig. 4, in der eine Ansicht von schräg hinten auf das in den Fig. 2 und 3 gezeigte Schneidelement gezeigt ist. In dieser Ansicht ist auch der bogenförmige Verlauf des Übergangs 16 sowie die nach hinten abfallende Kante der Stirnseite 20 erkennbar. Auch in dieser Ansicht ist noch einmal in strichpunktierter Linie der Anstellwinkel 15 gezeigt, um den die Leitfläche 12 bei einer Rotationsbewegung des Schneidelements 10 in Rotationsrichtung R in den Freiraum zwischen der Stirnseite 20 und der Rotationsachse des Schneidelements 10 hineinragt.

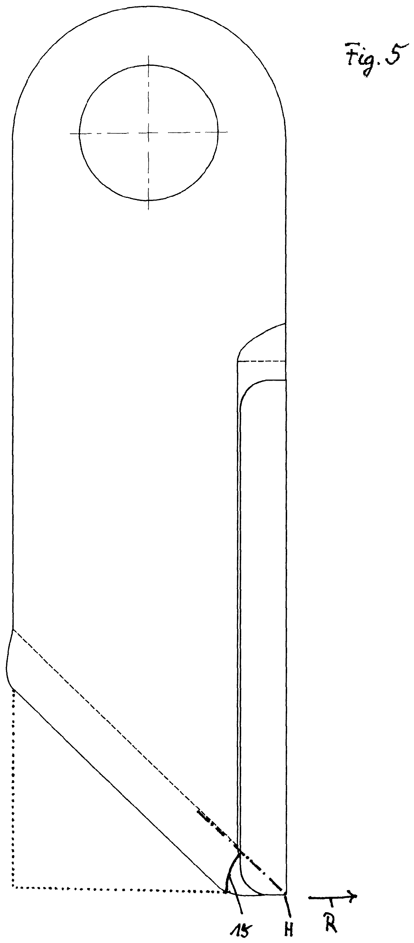

In Fig. 5 ist eine Ansicht von oben auf ein Schneidelement 10 gezeigt. Auch hier ist eine rechteckige Grundform des Schneidelements 10 durch gepunktete Linien angedeutet.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

## Patentansprüche

1. Anbaugerät zur Ernte von stängeligem Halmgut mit einer Fördervorrichtung und einer in einer Ebene unterhalb der Fördervorrichtung angeordneten Vorrichtung (8) zum Schneiden von Stängeln, die zumindest ein in einer horizontalen oder zumindest annähernd horizontalen Ebene rotierend umlaufendes Schneidelement (10) aufweist, **dadurch gekennzeichnet, dass** das Schneidelement (10) an seinem äußeren Rand eine Leitfläche (12) aufweist, die sich von der Klingenebene (14) aus abwärts erstreckt, wobei die Leitfläche (12) in Rotationsrichtung (R) des Schneidelements (10) nach innen um einen Anstellwinkel (15) angestellt ist.

2. Anbaugerät nach Anspruch 1, **dadurch gekennzeichnet, dass** der Übergang (16) von der Klingenebene (14) zur Leitfläche (12) in einem gerundeten Bogen verläuft.

3. Anbaugerät nach Anspruch 1 oder 2, **dadurch gekennzeichnet, dass** die Leitfläche (12) in einem Anstellwinkel (15) von mehr als 15° zur Senkrechten auf die Klingenvorderkante (18) nach innen weisend angestellt ist.

4. Anbaugerät nach einem der vorhergehenden Ansprüche, **dadurch gekennzeichnet, dass** die Leitfläche (12) an ihrer in Rotationsrichtung (R) weisenden Stirnseite (20) eine schräg verlaufende Kante aufweist, die von der Klingenvorderkante (18) im oberen Bereich nach unten hin entgegen der Rotationsrichtung (R) nach hinten zurückfällt.

5. Anbaugerät nach einem der vorhergehenden Ansprüche, **dadurch gekennzeichnet, dass** die Unterkante (22) der Leitfläche (12) entgegen der Rotationsrichtung (R) von vorne nach hinten im Verhältnis zur Klingenebene (14) nach unten abfällt.

6. Anbaugerät nach einem der vorhergehenden Ansprüche, **dadurch gekennzeichnet, dass** die Leitfläche (12) in ihrem hinteren Drittel die größte Höhenerstreckung (D) aufweist.

7. Anbaugerät nach einem der vorhergehenden Ansprüche, **dadurch gekennzeichnet, dass** der Anstellwinkel (24) der Leitfläche (12) zur Klingenebene (14) in radialer Richtung von der Schwenkachse des Schneidelements (10) und in vertikaler Richtung zum Boden 80° bis 100° beträgt.

8. Anbaugerät nach einem der vorhergehenden Ansprüche, **dadurch gekennzeichnet, dass** die Stirnseite (20) und/oder die Unterkante (22) der Leitfläche (12) gegenüber dem übrigen Material der Leitfläche (12) eine Materialhärtung aufweisen.

9. Anbaugerät nach einem der vorhergehenden Ansprüche, **dadurch gekennzeichnet, dass** auf die Leitfläche (12) eine auswechselbare Verschleißplatte aufgesetzt ist.

## Claims

1. Implement for harvesting stalk material, having a conveying apparatus and an apparatus (8) for cutting stalks, which is arranged in a plane below the conveying apparatus and which has at least one cutting element (10) rotating in a horizontal or at least approximately horizontal plane, **characterized in that** the cutting element (10) has a guiding surface (12) at its outer edge, which extends downward from the blade plane (14), wherein the guiding surface (12) is adjusted inward by an angle of attack (15) in the rotational direction (R) of the cutting element (10) .

2. Implement according to claim 1, **characterized in that** the transition (16) from the blade plane (14) to the guiding surface (12) extends in a rounded arc.

3. Implement according to claim 1 or 2, **characterized in that** the guiding surface (12) is aligned such that it points inward at an angle of attack (15) of more than 15° to the plane which is perpendicular to the blade's leading edge (18).

4. Implement according to any one of the preceding claims, **characterized in that** the guiding surface (12) on its front side (20) pointing in the rotational direction (R) has an edge which extends at an oblique angle and which recedes downward from the blade's leading edge (18) against the rotational direction (R) in the upper region.

5. Implement according to any one of the preceding claims, **characterized in that** the lower edge (22) of the guiding surface (12) recedes downward against the rotational direction (R) from front to back in relation to the blade plane (14).

6. Implement according to any one of the preceding claims, **characterized in that** the guiding surface (12) has the greatest height extension (D) in its rear third.

7. Implement according to any one of the preceding claims, **characterized in that** the angle of attack (24) of the guiding surface (12) to the blade plane (14) is 80° to 100° from the pivot axis of the cutting element (10) in the radial direction and to the ground in the vertical direction.

8. Implement according to any one of the preceding claims, **characterized in that** the front side (20) and/or the lower edge (22) of the guiding surface (12) have a harder material compared to the remaining material of the guiding surface (12).

9. Implement according to any one of the preceding claims, **characterized in that** a replaceable wearing plate is attached on the guiding surface (12).

## Revendications

1. Appareil rapporté de récolte de produits à tige sur pied avec un dispositif de transport et un dispositif (8) agencé dans un plan en dessous du dispositif de transport pour la coupe des tiges, qui présente au moins un élément de coupe (10) périphérique tournant dans un plan horizontal ou au moins approximativement horizontal, **caractérisé en ce que** l'élément de coupe (10) présente au niveau de son bord extérieur une surface de guidage (12) qui s'étend depuis le plan de la lame (14) vers le bas, dans lequel la surface de guidage (12) est mise en place dans le sens de rotation (R) de l'élément de coupe (10) vers l'intérieur autour d'un angle d'incidence (15).

2. Appareil rapporté selon la revendication 1, **caractérisé en ce que** la transition (16) du plan de la lame (14) à la surface de guidage (12) s'étend en un arc arrondi.

3. Appareil rapporté selon la revendication 1 ou 2, **caractérisé en ce que** la surface de guidage (12) est mise en place tournée vers l'intérieur dans un angle d'incidence (15) de plus de 15° par rapport à la perpendiculaire sur l'arête avant de la lame (18).

4. Appareil rapporté selon l'une des revendications précédentes, **caractérisé en ce que** la surface de guidage (12) au niveau de son côté avant (20) tourné dans le sens de rotation (R) présente une arête s'étendant en biais qui retombe vers l'arrière de l'arête avant de la lame (18) dans la zone supérieure vers le bas dans le sens inverse au sens de rotation (R).

5. Appareil rapporté selon l'une des revendications précédentes, **caractérisé en ce que** l'arête inférieure (22) de la surface de guidage (12) descend vers le bas dans le sens inverse au sens de rotation (R) de l'avant vers l'arrière par rapport au plan de la lame (14).

6. Appareil rapporté selon l'une des revendications précédentes, **caractérisé en ce que** la surface de guidage (12) présente dans son tiers arrière la plus grande étendue verticale (D).

7. Appareil rapporté selon l'une des revendications précédentes, **caractérisé en ce que** l'angle d'incidence (24) de la surface de guidage (12) au plan de la lame (14) s'élève de 80° à 100° dans le sens radial de l'axe de pivotement de l'élément de coupe (10) et dans le sens vertical au sol.

8. Appareil rapporté selon l'une des revendications précédentes, **caractérisé en ce que** le côté avant (20) et/ou l'arête inférieure (22) de la surface de guidage (12) par rapport au matériau restant de la surface de guidage (12) présentent un durcissement de matériau.

9. Appareil rapporté selon l'une des revendications précédentes, **caractérisé en ce qu'**une plaque d'usure interchangeable est placée sur la surface de guidage (12).
